(19) Europäisches Patentamt
European Patent Office
Office européen des brevets

(11) **EP 2 444 361 A2**

(12) **EUROPÄISCHE PATENTANMELDUNG**

(43) Veröffentlichungstag:
    **25.04.2012 Patentblatt 2012/17**

(21) Anmeldenummer: **11450135.6**

(22) Anmeldetag: **21.10.2011**

(51) Int Cl.:
    **B66F 11/04** *(2006.01)*     **E01D 19/10** *(2006.01)*
    **G01N 21/17** *(2006.01)*     **G01N 29/04** *(2006.01)*
    **B66C 13/48** *(2006.01)*

(84) Benannte Vertragsstaaten:
    **AL AT BE BG CH CY CZ DE DK EE ES FI FR GB
    GR HR HU IE IS IT LI LT LU LV MC MK MT NL NO
    PL PT RO RS SE SI SK SM TR**
    Benannte Erstreckungsstaaten:
    **BA ME**

(30) Priorität: **22.10.2010 AT 17652010**

(71) Anmelder: **Fuxjäger, Gerald**
    **8047 Hart (AT)**

(72) Erfinder: **Fuxjäger, Gerald**
    **8047 Hart (AT)**

(74) Vertreter: **Wildhack & Jellinek**
    **Patentanwälte**
    **Landstraßer Hauptstraße 50**
    **1030 Wien (AT)**

(54) **Brücken-Untersichtgerät**

(57)    Die Erfindung betrifft ein Verfahren zur Aufnahme von Messdaten an zu untersuchenden Stellen mit einem Fahrzeug, wobei das Fahrzeug (1) einen Ausleger (2) aufweist,

- wobei an dem Endbereich (22) des Auslegers (2) ein Sensor (3) angeordnet ist,

- wobei das Fahrzeug bewegt wird, und die Position (B) und Ausrichtung (B') des Fahrzeugs (1) in Bezug auf ein vorgegebenes Bezugssystem (A, A') bestimmt werden,

- wobei die Position des Auslegers (2) derart festgelegt wird, dass der Sensor (3) jeweils auf eine der zu untersuchenden Stellen (41) gerichtet wird,

- wobei die Relativposition (C) und Relativausrichtung (C') des Sensors (3) gegenüber dem Fahrzeug (1) ermittelt werden,

- wobei aufgrund der ermittelten Position (B) und Ausrichtung (B') des Fahrzeugs (1) und der Relativposition (C) und Relativausrichtung (C') des Sensors (3) gegenüber dem Fahrzeug (1) die Messposition (D) und die Messausrichtung (D') des Sensors (3) gegenüber dem Bezugssystem (A, A') ermittelt werden, und

- wobei Messdatensätze erstellt werden, die die mit dem Sensor (3) ermittelten Messwerte sowie diejenige Messposition (D) und Messausrichtung (D') enthalten, in der sich der Sensor (3) zum Zeitpunkt der Aufnahme des Messwerts befunden hat.

Fig.1

EP 2 444 361 A2

**Beschreibung**

Die Erfindung betrifft ein Verfahren zur Aufnahme von Messdaten gemäß dem Oberbegriff des Patentanspruchs 1. Weiters betrifft die Erfindung ein Fahrzeug gemäß dem Oberbegriff des Patentanspruchs 9.

Das erfindungsgemäße Verfahren und erfindungsgemäße Fahrzeuge werden insbesondere zur Prüfung der strukturellen Integrität von Bauwerken, vorzugsweise von Brücken, verwendet.

Derzeit gibt es in Österreich rund 33000 Brücken, darunter etwa 6000 Bahnbrücken. Alle diese Brücken müssen aufgrund gesetzlicher Vorschriften in Intervallen von 6 Jahren auf ihre Belastbarkeit und Funktionstauglichkeit überprüft werden. Dies geschieht üblicherweise durch eine Vermessung und Inspektion der Beschaffenheit des Materials der Brücke und wird typischerweise optisch subjektiv, mit Prüfhammer und im Bedarfsfall eventuell mittels Ultraschall, Festigkeitsmessungen, Dichtemessungen, Vermessungen von Rissen, insbesondere Rissbreiten, Risslängen und Rissformen, Temperaturmessungen usw. durchgeführt. Während sich die Brücken in Österreich in einem vergleichsweise guten Zustand befinden, haben Schätzungen ergeben, dass etwa in den USA etwa 27,1 % der Brücken potentiell schadhaft sind und einer dringenden Überprüfung bedürfen.

Die Notwendigkeit einer regelmäßigen Überprüfung wird durch das verstärkte Verkehrsaufkommen sowie durch die Belastung durch immer schwerere Fahrzeuge noch zusätzlich erhöht.

Technischer Hintergrund der Erfindung ist die Vermessung und Dokumentation von mechanischen und physikalischen Eigenschaften von Bauwerken, insbesondere Brücken. Es sollen an einer Vielzahl von Stellen des Bauwerks vollflächig photographische Messwerte unterschiedlicher Art aufgenommen werden. Diese Messwerte sollen einer entsprechenden einschlägigen Analyse durch einen Sachverständigen unterzogen werden, die Aufschluss über den Zustand des jeweiligen Bauwerks gibt. Häufig sind diejenigen Stellen, an denen die Messungen durchzuführen sind, nur schwer zugänglich; die Messung der relevanten physikalischen Größen ist besonders erschwert, wenn sich die jeweiligen Sensoren in unmittelbarer Nähe des Bauwerks befinden, insbesondere, wenn sie unmittelbar an die betreffenden Stellen angelegt oder auf die Stellen aufgesetzt werden müssen.

Ein weiterer wesentlicher Nachteil des Standes der Technik liegt darin, dass für ältere Brücken, die insbesondere älter als 20 Jahre sind, oft keine Pläne zur Verfügung stehen. Es ist somit fast unmöglich, die Lage und Dimensionierung der Bewehrung zu erfassen und äußerst schwierig, Darstellungen der Messdaten der Brücken oder Bauwerke zu erstellen.

Aus dem Stand der Technik sind Verfahren bekannt, bei denen die Messgeräte von Personen vor Ort positioniert werden müssen. Insbesondere bei Brücken sind solche Verfahren nicht nur zeitaufwendig und personalintensiv sondern es besteht auch ein erhebliches Unfallrisiko, da sich die Personen, die die Sensoren positionieren, auf einem temporären Gerüst unterhalb der Brücke befinden. Die Daten werden aufgrund der mit der Aufnahme verbundenen Gefahren zumeist nur an denjenigen Stellen aufgenommen, an denen typischerweise Fehler zu erwarten sind. Die Datenaufnahme erfolgt normalerweise nicht digital und liefert inhomogene, subjektive, kaum nachvollziehbare Ergebnisse. Stellt sich heraus, dass Probleme an anderen Stellen der Brücke auftreten, so muss die Messung wiederholt werden, wobei kaum auf bereits ermittelte Daten zurückgegriffen werden kann.

Die Erfindung setzt sich somit zur Aufgabe, ein Verfahren bereitzustellen, das einfacher, insbesondere mit geringerem Personal- und Zeitaufwand, durchführbar ist und das Unfallrisiko bei der Messung deutlich reduziert. Insbesondere stellt sich die Erfindung die Aufgabe, dass eine vorteilhafte Darstellung der einzelnen Messwerte möglich ist, ohne dass ein Plan der Brücke vorgegeben werden muss.

Weiters hat die Erfindung die Aufgabe, ein Fahrzeug zu schaffen, das die Vermessung und Inspektion eines Gebäudes ermöglicht. Es soll mit erreicht werden, dass die Inspektion einfach und risikofrei zu durchzuführen ist und eine genaue Einstellung der Messposition, insbesondere durch Positionierung einzelner Sensoren, möglich ist. Zudem sollen die Messergebnisse auf einfache Weise abgespeichert und dargestellt werden können.

Mit dem im folgenden dargestellten erfindungsgemäßen Verfahren der Bauwerksvermessung, insbesondere der Betonprüfung, soll es in den absehbarer Zeit möglich sein, flächendeckend und ressourcensparend den gesamten Sachbestand des Anlagevermögens von Verkehrsinfrastrukturbetrieben zu erfassen, nachvollziehbar zu dokumentieren und zugänglich zu machen.

Die Erfindung löst diese Aufgabe bei einem Verfahren der eingangs genannten Art durch die kennzeichnenden Merkmale des Patentanspruchs 1. Die Erfindung löst diese Aufgabe bei einem Fahrzeug der eingangs genannten Art durch die kennzeichnenden Merkmale des Patentanspruchs 9.

Erfindungsgemäß ist bei einem Verfahren zur Aufnahme von Messdaten an entlang einer Straße an einer Brücke oder an einem Bauwerk befindlichen, zu untersuchenden Stellen mit einem Fahrzeug vorgesehen, dass das Fahrzeug einen Ausleger umfassend eine Anzahl von mit Gelenken verbundenen Auslegerelementen aufweist, wobei die Stellung der Gelenke durch Stellelemente stellbar ist. An dem dem Fahrzeug fernen Endbereich des Auslegers ist zumindest ein Sensor angeordnet. Das Fahrzeug wird entlang der Straße oder über die Brücke bewegt und die Position und Ausrichtung des Fahrzeugs in werden Bezug auf ein vorgegebenes Bezugssystem mit einem vorgegebenen festen Bezugspunkt und einer Bezugsausrichtung bestimmt. Die Position des Auslegers wird durch Verstellung der Stellelemente derart festgelegt, dass der Sensor jeweils auf eine der entlang der Straße oder Brücke angeordneten, zu untersuchenden Stellen gerichtet wird. Anhand der gewählten Einstellung der Stellelemente werden die Relativposition und Relativausrichtung des Sensors gegenüber dem Fahrzeug ermittelt. Aufgrund der ermittelten Position und Ausrichtung des Fahrzeugs gegenüber dem Bezugssystem und der Relativposition und Relativausrichtung des Sensors gegenüber dem Fahrzeug werden die Messposition und die Messausrichtung des Sensors gegenüber dem Bezugssystem ermittelt.

Es werden Messdatensätze erstellt, die die mit dem Sensor ermittelten Messwerte sowie diejenige Messposition und Messausrichtung enthalten, in der sich der Sensor zum Zeitpunkt der Aufnahme des Messwerts befunden hat.

Vorteilhafterweise ergibt sich dabei, dass die schwer zugänglichen Stellen mit wesentlich geringerem Personalaufwand und Zeitaufwand erreicht werden können und dass die Messung insgesamt einfacher durchgeführt werden kann. Zudem ergibt sich der Vorteil, dass die Gefährdung der die Messung vornehmenden Personen deutlich reduziert wird. Mit der Erfindung ist es möglich, die Datenaufnahme unabhängig von der Verfügbarkeit eines Bauplans des jeweiligen Bauwerks, insbesondere der jeweiligen Brücke, durchzuführen, wobei eine einfache Darstellung der Messwerte möglich ist, bei der die Messwerte an derjenigen Stelle angezeigt werden, an der sie aufgenommen worden sind. Ein weiterer wesentlicher Vorteil ergibt sich daraus, dass Messungen nach einigen Jahren wiederholt werden können und die Messungen einfach miteinander verglichen werden können. Zudem ist vorteilhaft, dass Stellen mit diagnostizierten Schäden im Zuge eines Reparaturverfahrens einfach und präzise angesteuert werden können. Die Schäden können gegebenenfalls erneut diagnostiziert werden. Schließlich können detektierte Schäden auf einfache Weise angesteuert und saniert werden.

Ferner ist es möglich, das Verfahren in mehreren zeitlich beabstandeten Durchläufen mit unterschiedlichen zu wiederholen und aus den einzelnen Aufnahmen der einzelnen Messfahrzeuge ein gemeinsames, zusammengesetztes Gesamtbild zu erstellen. Somit ist es möglich, Synergieeffekte zu nutzen und mehrere Messparameter zu erfassen, was eine erhöhte Messgenauigkeit und Aussagekraft bewirkt. Durch die einfache Art der Messung ist es möglich, eine vollflächige Information zu erhalten, insbesondere ist es durch die Erfindung möglich, eine detaillierte Darstellung der Messparameter der gesamten Brücke zu erhalten. Ferner ist eine Anbindung an bestehende Datenbanksysteme ohne Weiteres möglich.

Mit dem erfindungsgemäßen Verfahren ist es nunmehr auch nicht mehr erforderlich, eine gesamte Autobahnspur zu sperren, da das Fahrzeug selbständig über die Fahrbahn bewegt werden kann und kein Gerüst montiert werden muss. Dis hat bei den aus dem Stand der Technik bekannten bisherigen Verfahren für erhebliche Verkehrsprobleme gesorgt. Weiters können die Vermessungsarbeiten nunmehr über das ganze Jahr hinweg durchgeführt werden, während die Verfahren des Standes der Technik aus Wetter- und Verkehrsgründen vorwiegend im Frühjahr und Herbst möglich waren. Das unsystematische und zumeist auf persönlicher Erfahrung beruhende händische Messen kann mit dem erfindungsgemäßen Verfahren objektiviert und mit wesentlich geringerer Kompetenz vor Ort durchgeführt werden.

Mit der Erfindung ist eine vollständige, systematische, digitale Dokumentation der Oberflächen mit Rissbildern, Rissbreiten, deren Veränderungen sowie deren Rauigkeiten möglich.

Vorteilhafte Ausgestaltungen des erfindungsgemäßen Verfahrens sind in den abhängigen Ansprüchen dargestellt, ohne den Schutzumfang zu beschränken.

Vorteilhafterweise kann vorgesehen werden, dass die Ermittlung der Position und Ausrichtung des Fahrzeugs in Bezug auf den vorgegebenen, festen Bezugspunkt mittels GPS und/oder mittels eines Kompasses und/oder mittels eines Neigungsmessgeräts und/oder sonstigen geeigneten Methoden und Sensoreinheiten vorgenommen wird. Hierdurch wird eine bessere Zuordnung zwischen den aufgenommenen Messwerten und der jeweiligen Position erreicht, an der die Messwerte bestimmt worden sind.

Weiters kann vorgesehen werden, dass an dem dem Fahrzeug fernen Endbereich des Auslegers eine Kamera angeordnet ist, die auf die zu untersuchenden Stellen gerichtet ist,

- dass anhand der mit der Kamera aufgenommenen Bilder zu einem Bildverband aneinandergefügt werden, wobei jedes Pixel des Bildverbands genau ein Oberflächenpunkt des Bauwerks oder der Brücke entspricht,
- dass für jedes der Pixel des Bildverbands jeweils die Koordinaten des abgebildeten Oberflächenpunkts des Bauwerks oder der Brücke zugewiesen werden und,
- dass die Bestimmung der Messposition und Messausrichtung der Sensoren durch die Lokalisierung des jeweiligen zugehörigen Raumpunktes anhand des aktuellen, mit der Kamera erstellten Bildes im Bildverband erfolgt.
. Dies ermöglicht eine genauere Bestimmung der Position des jeweiligen Sensors sowie derjenigen Position, in der der Messwert bestimmt worden ist.

Es kann vorgesehen werden, dass der am Fahrzeug angeordnete Ausleger derart angesteuert ist, dass auftretende Schwingungen des Auslegers kompensiert werden. Dies verbessert die Bestimmung der Position des jeweiligen Sensors sowie derjenigen Position, in der der Messwert bestimmt worden ist, zusätzlich.

Alternativ oder zusätzlich kann vorgesehen werden, dass das Fahrgestell des Fahrzeugs und/oder die Verbindung zwischen dem Fahrzeug und dem Ausleger drehmomentkompensiert und/oder schwingungsgedämpft wird. Dies ermöglicht eine weitere Verbesserung der Bestimmung der Position des jeweiligen Sensors sowie derjenigen Position, in der der Messwert bestimmt worden ist.

Ein weiterer Aspekt der Erfindung sieht vor, dass der Ausleger mehr als fünf, vorzugsweise genau oder mehr als sieben, unabhängig voneinander ansteuerbare Stellelemente aufweist. Hierdurch können schwierig zugängliche Stellen einfach erreicht werden.

Es kann ferner vorgesehen sein, dass mehrere an dem dem Fahrzeug fernen Endbereich des Auslegers befindliche Sensoren vorgesehen sind, wobei die jeweilige Messposition und Messausrichtung der einzelnen Sensoren gemeinsam mit der jeweils von einem Sensor ermittelten Messgröße in einem Messdatensatz abgespeichert werden.. Dies verbessert die Auswertbarkeit der Daten und vereinfacht die grafische Darstellung der aufgenommenen Datensätze.

Es kann auch vorgesehen sein, dass der Sensor mit einer Anzahl von nebeneinander oder rasterförmig angeordneten Sensorpixeln zur Aufnahme von Zeilen- oder Flächenbildern ausgebildet ist,

- dass für jedes Sensorpixel des Sensors vorab derjenige Raumbereich, Flächenbereich oder Raumpunkt in Bezug auf eine vorgegebene Position am Sensor ermittelt wird, dessen physikalische Eigenschaften vom jeweiligen Sensorpixel in Form eines Messwerts ermittelt werden,
- dass anhand der Messposition und Messausrichtung sowie des dem jeweiligen Sensorpixels zugeordneten Raumbereichs Flächenbereichs oder Raumpunkts die Pixelposition, und gegebenenfalls die Pixelausrichtung, des vom Pixel aufgenommenen Raumbereichs gegenüber dem Bezugspunkt ermittelt werden, und
- dass für jeden mit jeweils einem Sensorpixel aufgenommenen Messwert ein Messdatensatz erstellt wird, der den Messwert sowie die Pixelposition und gegebenenfalls die Pixelausrichtung enthält.

. Dies ermöglicht eine gleichzeitige Ermittlung einer Vielzahl von Messwerten sowie eine Verbesserung der Auswertung der aufgenommenen Datensätze. Insbesondere schaffen die genannten Maßnahmen die Kombination des Verfahrens mit bildgebenden Sensoren.

Weiters betrifft die Erfindung ein Fahrzeug umfassend einen Ausleger mit einer Anzahl von Gelenken und Stellelementen, wobei an dem dem Fahrzeug fernen Endbereich des Auslegers zumindest ein Sensor angeordnet ist, und wobei das Fahrzeug eine Positionsbestimmungseinheit zur Bestimmung der Position und Ausrichtung des Fahrzeugs in Bezug auf einen vorgegebenen, festen Bezugspunkt aufweist,

Das erfindungsgemäße Fahrzeug umfasst eine Sensorpositionsbestimmungseinheit die die Relativposition und Relativausrichtung des Auslegers gegenüber dem Fahrzeug ermittelt, eine Messpositionsbestimmungseinheit, die aufgrund der ermittelten Position und Ausrichtung des Fahrzeugs gegenüber dem Bezugspunkt und der durch die Stellung der Gelenke der Stellelemente festgelegten Relativposition und Relativausrichtung des Sensors gegenüber dem Fahrzeug die Messposition und die Messausrichtung des Sensors gegenüber dem Bezugspunkt ermittelt, sowie eine Datenerfassungseinheit mit einem Speicher, die die mit dem Sensor ermittelten Messwerte derjenigen Messposition und auch derjenigen Messausrichtungen zuordnet, in der sich der Sensor zum Zeitpunkt der Aufnahme des Messwerts befindet oder befunden hat.

Mit einem solchen Fahrzeug ist das erfindungsgemäße Verfahren einfach durchführbar. Das Fahrzeug erreicht auch schwer zugänglichen Stellen mit wesentlich geringerem Personalaufwand und Zeitaufwand als die bekannten temporären Vermessungsgerüste. Der Aufwand der erneuten Durchführung einer Vermessung ist sehr gering. Zudem wird die Gefährdung der die Messung durchführenden Person deutlich reduziert.

Vorteilhafte Ausgestaltungen des erfindungsgemäßen Fahrzeugs sind in den abhängigen Ansprüchen dargestellt, ohne den Schutzumfang zu beschränken.

Gemäß einer weiteren vorteilhaften Weiterbildung der Erfindung kann vorgesehen sein, dass die Positionsbestimmungseinheit ein GPS-Gerät, sowie gegebenenfalls einen Kompass und/oder ein Neigungsmessgerät umfasst. Dies ermöglicht eine verbesserte Positionsbestimmung des die Messwerte aufnehmenden Sensors.

Weiters kann vorgesehen sein, dass eine Kamera vorgesehen ist, die an dem dem Fahrzeug fernen Endbereich des Auslegers angeordnet ist, dass ein Bildspeicher zum Abspeichern eines Bildverbands vorgesehen ist, der aus der mit der Kamera aufgenommenen Bildern zusammengesetzt ist, dass eine Bildverbandsbildungseinheit vorgesehen ist, der die einzelnen Bilder zugeführt sind und die aus den Bildern einen Bildverband erstellt, dass der Kamera eine Positionierungseinheit zur Bestimmung der Relativposition nachgeschaltet ist, in der ein "Structure and Motion"- Algorithmus implementiert ist, und der Bildverband sowie die von der Kamera erstellten Bilder der Positionierungseinheit zugeführt ist, und dass die von der Positionierungseinheit ermittelte Relativposition der Messpositionsbestimmungseinheit zugeführt ist. Dies vereinfacht die Positionierung der Sensoren. Ferner wird eine genauere Positionierung der Sensoren erreicht.

Ein weiterer bevorzugter Aspekt der Erfindung sieht vor, dass der am Fahrzeug angeordnete Ausleger über eine Drehmomentkompensation verfügt, die derart ausgebildet ist, dass auftretende Schwingungen des Auslegers kompensiert werden, und/oder dass das Fahrgestell des Fahrzeugs und/oder die Verbindung zwischen dem Fahrzeug und dem Ausleger schwingungsgedämpft ist.. Dabei ist insbesondere vorteilhaft, dass eine besonders genaue und von äußeren Umwelteinflüssen unabhängige Positionierung der Sensoren möglich ist.

Alternativ oder zusätzlich kann vorgesehen werden, dass der Ausleger mehr als fünf, vorzugsweise genau oder mehr als sieben, unabhängig voneinander ansteuerbare Stellelemente aufweist.

Dies verbessert die Reichweite und erhöht die Anzahl der möglichen zu vermessenden Stellen, die mit dem Fahrzeug erreichbar sind.

Außerdem kann vorgesehen sein, dass mehrere an dem dem Fahrzeug fernen Endbereich des Auslegers befindliche Sensoren vorgesehen sind, und dass

die Datenerfassungseinheit die jeweilige Messposition und Messausrichtung der einzelnen Sensoren gemeinsam mit dem jeweils von einem Sensor ermittelten Messgröße in einem Messdatensatz in ihrem Speicher abspeichert.. Dies verbessert zusätzlich die Genauigkeit der Messung und ermöglicht eine gemeinsame Darstellung der aufgenommenen Messwerte in einem gemeinsamen Koordinatensystem.

Schließlich kann vorgesehen sein, dass der Sensor mit einer Anzahl von nebeneinander oder rasterförmig angeordneten Sensorpixeln zur Aufnahme von Zeilen- oder Flächenbildern ausgebildet ist, dass für jedes Sensorpixel des Sensors vorab derjenige Raumbereich, Flächenbereich oder Raumpunkt in Bezug auf eine vorgegebene Position am Sensor vorgegeben ist, dessen physikalische Eigenschaften vom jeweiligen Sensorpixel in Form eines Messwerts zu ermitteln sind, und dass die Datenerfassungseinheit anhand der Messposition und Messausrichtung sowie des dem jeweiligen Sensorpixels zugeordneten Raumbereichs, Flächenbereichs oder Raumpunkts die Pixelposition, und gegebenenfalls und die Pixelausrichtung, des vom Pixel aufgenommenen Raumbereichs gegenüber dem Bezugspunkt ermittelt und für jeden mit jeweils einem Sensorpixel aufgenommenen Messwert einen Messdatensatz erstellt, der den Messwert sowie die Pixelposition und gegebenenfalls die Pixelausrichtung enthält. Hierdurch können auch unterschiedliche bildgebende Sensoren verwendet werden, deren Messdaten in Bezug auf ein gemeinsames Bezugssystem darstellbar sind.

Die Erfindung wird anhand zweier Ausführungsbeispiele anhand der Figuren ohne Einschränkung der Allgemeinheit des erfinderischen Gedankens näher dargestellt.

Fig. 1 zeigt ein erfindungsgemäßes Fahrzeug auf einem Straßenabschnitt einer Brücke.
Fig. 2 zeigt eine besondere Ausführungsform eines Trägers.
Fig. 3 zeigt eine alternative Ausführungsform eines Trägers.
Fig. 4 zeigt das erfindungsgemäße Fahrzeug bei einer Prüfung eines Tunnels.
Fig. 5 zeigt ein bevorzugtes Vorgehen bei der Inspektion eines Tunnels.
Fig. 6 zeigt einen als Flächensensor ausgebildeten Sensor.
Fig. 7 zeigt einem als Zeilensensor ausgebildeten Sensor.
Fig. 8 zeigt einem Ultraschallsensor.
Fig. 9 zeigt eine schematische Darstellung einer Verarbeitungseinheit.
Fig. 10 zeigt die Erstellung eines Bildverbands aus einer Vielzahl von Einzelbildern sowie die Erstellung des dreidimensionalen Abbilds einer zu vermessenden Brücke.

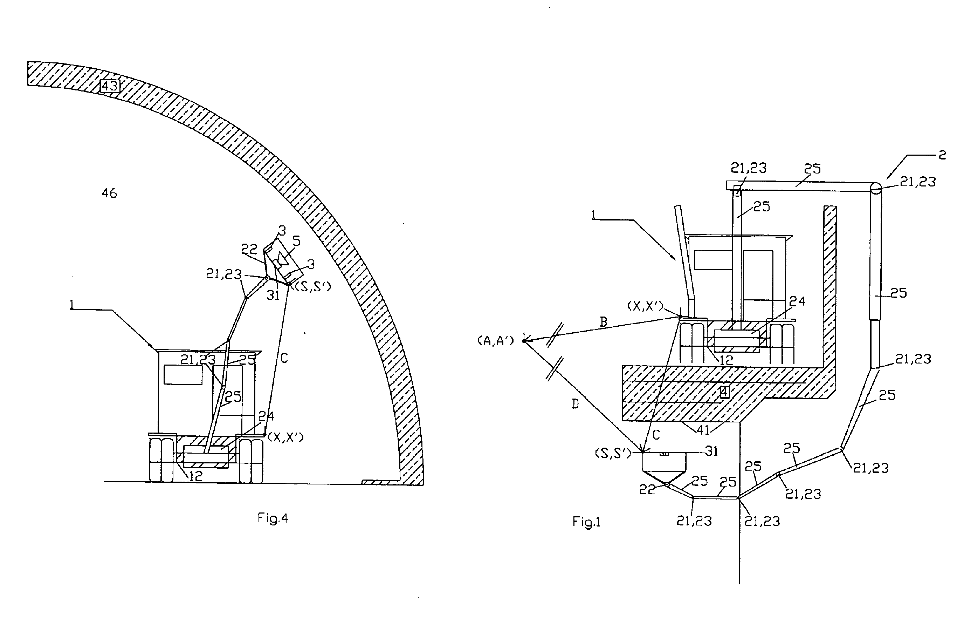

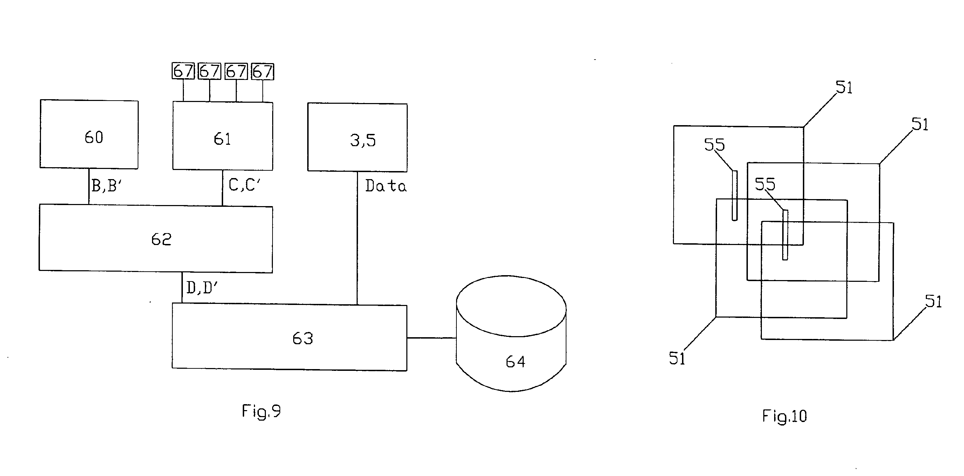

Das in **Fig.** 1 dargestellte erfindungsgemäße Fahrzeug 1 umfasst einen Ausleger 2 mit einer Anzahl von über Gelenke 21 verbundenen Auslegerelementen 25 und Stellelementen 23. Die Stellelemente 23 sind von einer nicht dargestellten Stelleinheit angesteuert und verschwenken die Auslegerelemente 25 gegeneinander, wobei jedes Stellelement 23 die Stellung jeweils eines der Gelenke 21 variiert. In diesem Ausführungsbeispiel ist vorgesehen, dass die Stellung jedes der Gelenke von jeweils einer Gelenksstellungsmesseinheit 67, dargestellt in Fig. 10, bestimmt wird. Die einzelnen Auslegerelemente 25 des Auslegers 2 sind aus Kohlefaser gefertigt. Selbstverständlich können auch andere leichte und verwindungssteife Materialien für die Ausbildung der Auslegerelemente 25 herangezogen werden.

Es ist vorgesehen, die Stellelemente 23 mit Servomotoren auszubilden, die im jeweiligen Gelenk 21 zwischen zwei Auslegerelementen 25 angeordnet sind. Wirken auf die beiden Auslegerelemente 25 Kräfte, die ein Drehmoment auf das Gelenk 21 und somit auf das Stellelement 23 ausüben, so kommt es zu unpräzisen Bewegungen des gesamten Auslegers 2, was in weiterer Folge zu unpräzisen Messergebnissen führt. Um dies zu vermeiden, werden Maßnahmen und Einrichtungen zur Drehmomentkompensation eingesetzt. Hierbei ist vorgesehen, dass für jedes Gelenk 21 ein Drehmomentmessgerät vorgesehen ist, das das Drehmoment ermittelt, das zwischen den beiden an das Gelenk 21 angrenzenden Auslegerelemente 25 ausgeübt wird. Dies geschieht mit sehr hoher Frequenz, etwa mit 2 kHz. Treten an den Gelenken 21 Drehmomente auf, so sorgt eine Regelung dafür, dass die die jeweiligen Gelenke 21 ansteuernden Stellelemente 23 eine entsprechende Gegenbewegung einleiten bzw. ein entsprechendes Gegendrehmoment aufbauen, sodass eine durch die äußere Krafteinwirkung bewirkte Verstellung des Stellelements 23 unterdrückt wird. Derartige Stellelemente 23 zählen bereits zum Stand der Technik.

Im vorliegenden Ausführungsbeispiel ist auch das Fahrgestell des Fahrzeugs 1 gedämpft. Die Verbindung zwischen dem Fahrzeug 1 und dem Ausleger 2, die einzelnen in den Gelenken 21 befindlichen Stellelemente 23 sowie der Drehkranz 24 sind schwingungsgedämpft oder mit Maßnahmen zur Drehmomentkompensation ausgebildet.

In der in **Fig. 1** dargestellten Ausführungsform umfasst der Ausleger 2 sieben Gelenke 21 und ist auf einem auf dem Fahrzeug 1 montierten Drehkranz 24 montiert. Vorteilhaft ist die Verwendung von zumindest fünf über einzelne Auslegerelemente 25 miteinander verbundenen Gelenken 21, da hierdurch ein besonders einfacher Zugriff auf schlecht erreichbare Stellen 41 möglich wird.

Auf Straßen oder Brücken 4 sind in routinemäßigen Intervallen zumindest diejenigen Stellen 41 zu überprüfen, die für die strukturelle Integrität des gesamten Bauwerks 44 von erheblicher Bedeutung sind. Im vorliegenden Ausführungsbeispiel wird die gesamte Oberfläche des zu inspizierenden Bauwerks 44 untersucht, mittels der Sensoren 3 werden in regelmäßigen Intervallen Messergebnisse ermittelt. In der Regel wird das gesamte Bauwerk 44 vollflächig untersucht.

Dies sind etwa bei Brücken 4 die Unterkonstruktion umfassend die tragenden Teile der Brücke 4. An diesen Stellen ist die Erfassung von Messwerten, insbesondere von Risshäufigkeiten, Überdeckung, Rissbreiten, Materialfestigkeit, Porosität usw., von immanenter Bedeutung und ist ausschlaggebend dafür, wann eine Brücke 4 gewartet werden muss oder bereits eine Gefahr für die Allgemeinheit darstellt.

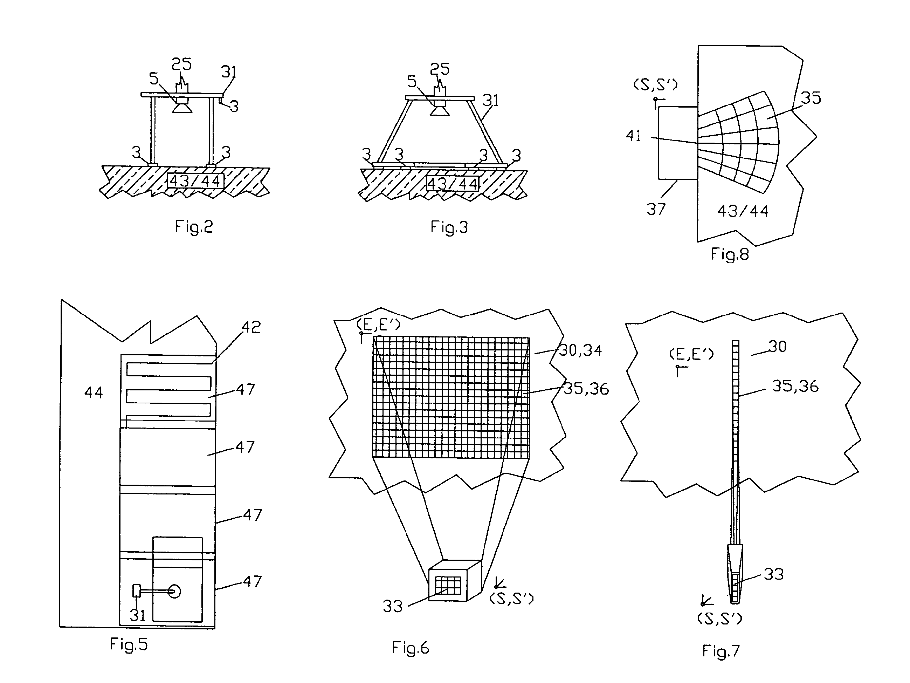

Die gesamte Oberfläche der Brücke 4 ist in zeitlichen Intervallen einer eingehenden Überprüfung zu unterziehen. Dasselbe gilt selbstverständlich auch für Straßenabschnitte, für Straßenabschnitte in Tunnels 46 (**Fig. 2**) oder in Parkhäusern, aber auch für mit Mauerwerk befestigte Straßenabschnitte.

Die Erfindung wird im vorliegenden Ausführungsbeispiel an Stellen 41 eingesetzt, die nur sehr schwer zu erreichen sind. In dem in Fig. 1 dargestellten Beispiel weist der Ausleger 2 des Fahrzeugs 1 sieben Gelenke 21 und acht Auslegerelemente 25 auf. Im Endbereich 22 des Auslegers 2 befindet sich ein Träger 31, auf dem eine Anzahl von Sensoren 3 sowie eine Kamera 5 angeordnet sind. Gegebenenfalls können neben den Sensoren 3 weitere Flächensensoren und Zeilensensoren angeordnet sein, die eine Vielzahl von rasterförmig angeordneten, einzelnen Sensorpixel 33 umfassen.

Sensoren 3 können unterschiedliche Kenngrößen der zu untersuchenden Stellen 41 ermitteln, beispielsweise die Festigkeit des zu inspizierenden bzw. zu prüfenden Bauwerks 44, etwa einer zu vermessenden Brücke 4, mittels eines Härtemessgeräts oder Druckmessgeräts, aber auch weiterer Größen wie der Temperatur, der Feuchtigkeit, der elektrischen Leitfähigkeit, der optischen Reflektivität bei unterschiedlichen Frequenzen usw. Zudem können auch die mittels der Kamera 5 aufgenommenen Bilder zur geometrischen Bestimmung bzw. Definition der Brücke 4 herangezogen werden. Dies kann mit den Methoden der Photogrammetrie auf zuverlässige Weise erfüllt werden.

Selbstverständlich kann die zur Vermessung des Bauwerks herangezogene Kamera 5 auch als Sensor 3 herangezogen werden.

**Fig. 2** zeigt den im ersten Ausführungsbeispiel konkret verwendeten Träger 31 im Detail. Die zur Messung von Materialeigenschaften der Brücke 4 oder der Straße ausgebildeten Sensoren 3 befinden sich in dieser besonderen Ausgestaltung der Erfindung auf einem gemeinsamen Träger 31, auf dem ferner die Kamera 5 angeordnet ist. Die Kamera 5 ist je nach Einsatzzweck in einem Abstand von 0,5 m bis 3 m, insbesondere einem Meter, vom Bauwerk 44 beabstandet. Die einzelnen Sensoren 3 liegen je nach Messprinzip entweder unmittelbar am Bauwerk 44 an oder sind in einem vorgegebenen Abstand vom Bauwerk 44 beabstandet.

**Fig. 3** zeigt einen alternativen Träger 31 im Detail, der gleichsam mit dem dargestellten ersten Ausführungsbeispiel der Erfindung verwendbar ist. Die zur Messung von Materialeigenschaften der Brücke 4 oder der Straße ausgebildeten Sensoren 3 und die Kamera 5 befinden sich auf gegeneinander versetzten Platten. Die Kamera 5 sowie die sie tragenden Platte sind in einem Abstand von ungefähr einem Meter vom Bauwerk 44 beabstandet. Die einzelnen Sensoren 3 liegen auf der anderen Platte und liegen unmittelbar am Bauwerk 44 an. In der die Sensoren 3 tragenden Platte ist eine Ausnehmung vorgesehen oder durchsichtig, die den Aufnahmebereich der Kamera 5 frei hält, sodass ein Teil der Oberfläche der Brücke 4 im Aufnahmebereich die Kamera 5 liegt. Die beiden Platten des Trägers 31 sind über Gestänge miteinander starr verbunden.

Die Erfindung kommt selbstverständlich auch bei anderen Arten von Bauwerken 44 verwendet werden. So zeigt **Fig. 4** ein weiteres Ausführungsbeispiel eines erfindungsgemäßen Fahrzeugs 1 mit einem Ausleger 2 mit weniger als fünf Gelenken 21. Die zu inspizierenden Stellen 41 sind einfach vom Fahrzeug 1 aus erreichbar. Das dargestellte Fahrzeug 1 verfügt über nur vier Gelenke 21, wobei auch die einzelnen Auslegerelemente 25 kürzer ausgebildet sind als im ersten Ausführungsbeispiel. Das in Fig. 4 dargestellte Ausführungsbeispiel zeigt die Vermessung und Inspektion mittels eines derartigen Fahrzeugs 1 in einem Tunnel 46.

**Fig. 5** zeigt schematisch das Vorgehen bei einer Vermessung und Inspektion einer Brücke 4. Messung Im Zuge der Messung wird der Träger 31 mit den Sensoren 3 und der Kamera 5 über die gesamte Oberfläche der Brücke 4 entlang eines Wegs 42 geführt.

Im Zuge der Vermessung der zu ermittelnden Eigenschaften der Brücke 4 fährt das Fahrzeug 1 entlang der Straße oder Brücke 4, wobei der Ausleger 2 so angesteuert wird, dass der dem Fahrzeug 1 ferne Endbereich 22 des Auslegers 2 über den gesamten Oberflächenbereich der Brücke 4 geführt wird. Die auf dem Träger 31 befindliche Kamera 5 wird entlang eines Wegs 42 geführt und liefert für die den Ausleger 2 bedienenden Personen oder Steuereinheiten ein digitales optisches Bild 51 der Brücke 4.

Das Fahrzeug 1 fährt auf die Brücke 4 und bliebt an einer Stelle stehen. Es wird ein erster Messvorgang durchgeführt, bei der der Träger 31 mit den Sensoren 3 und der Kamera 5 über einen Teilbereich 47 der Brücke 4 geführt wird, der innerhalb des Aktionsradius des Auslegers 2 liegt. Es werden alle Teilbereiche 47 der Brücke 4 erfasst, die innerhalb des Aktionsradius des Auslegers 2 liegen. Nach Durchführung der im folgenden beschriebenen Vermessung und Prüfung des Bauwerks 44 fährt das Fahrzeug 1 an eine nächste Stelle, bleibt wiederum stehen und führt einen nächsten Messvorgang in einem weiteren Teilbereich 47 der Brücke 4 durch. Die beiden gewählten Teilbereiche 47 überschneiden sich. Dieses Vorgehen wird so lange wiederholt, bis sämtliche zu vermessenden Teile der Brücke 4 vermessen und geprüft sind.

Die Sensoren 3 und die Kamera 5 werden entlang eines Wegs 42 über die zu überprüfenden Stellen 41 geführt. Die zu überprüfenden Stellen 41 können dabei punktuell vorgegeben sein. Alternativ kann auch vorgegeben werden, dass entlang des Wegs 42 in bestimmten Abständen Messdaten aufgezeichnet werden sollen, wobei die genaue Lage der einzelnen zu überprüfenden Stellen 41 unerheblich ist und lediglich deren Dichte, also etwa ein Messwert pro Zentimeter, vorgegeben ist. Zudem kann auch vorgegeben werden, dass bei besonders auffälligen Messwerten die Messabstände kleiner gewählt werden, um in diesem Bereich eine genauere Auflösung zu erhalten. Da sich die Sensoren 3 und die Kamera 5 auf demselben Träger 31 befinden, befinden sich auch die zu überprüfenden Stellen 41 innerhalb des von der Kamera 5 aufgenommenen Teilbereichs 47.

Um zuverlässige Aussagen über den Zustand der Brücke 4 treffen zu können, ist es erforderlich, neben den eigentlichen Messwerten auch diejenige Position zu erhalten, an denen der jeweilige Messwert aufgenommen worden ist. Das Vorgehen der Bestimmung der aktuellen Position der Sensoren 3 bei der Messung ist in **Fig. 1** schematisch dargestellt. Zu diesem Zweck wird die aktuelle Position D und Ausrichtung D' des verwendeten Sensors 3 in Bezug auf ein vorgegebenes festes Bezugssystem (A, A') mit einem vorgegebenen Bezugspunkt A als Ursprung ermittelt. Im vorliegenden Fall geschieht dies mittels einer Anzahl von isometrischen Transformationen, die die relative Positionierung B, B' des Fahrzeugs 1 gegenüber dem Bezugssystem (A, A') sowie die relative Positionierung C, C' der Sensoren 3 gegenüber dem Fahrzeug 1 bestimmt und basierend darauf die relative Positionierung D, D' des Sensors 3 gegenüber dem Bezugssystem (A, A') bestimmt.

Um eine sinnvolle Positionsangabe zu erreichen, ist es erforderlich, einen Bezugspunkt A anzugeben, auf den die im weiteren ermittelten Messpositionen bezogen werden. Ein solcher Bezugspunkt (A) kann willkürlich vorgegeben werden. Im vorliegenden Ausführungsbeispiel wird die Bestimmung der Messpositionen mittels eines GPS-Geräts vorgenommen. Vorzugsweise können differentielle GPS-Verfahren eingesetzt werden, um die Genauigkeit der Positionierung zu steigern.

Als Bezugspunkt A einer solchen Messung kann dabei ein beliebiger Fixpunkt angegeben werden. Zur eindeutigen Festlegung des Bezugssystems (A, A') ist neben dem Bezugspunkt A noch eine Bezugsausrichtung A' erforderlich. Im vorliegenden Ausführungsbeispiel wird Bezugsausrichtung A' kann etwa derart angegeben, dass die jeweiligen Koordinatenrichtungen des Bezugssystems nach Norden, nach Osten und vertikal nach oben angenommen werden.

Generell kann allerdings auch jedes beliebige andere Koordinatensystem als Bezugssystem (A, A') vorgegeben werden. Eine besonders vorteilhafte Alternative liegt darin, ein Bezugssystem (A, A') anzugeben, das die Bezugsausrichtung (A) als Koordinatenrichtungen eine waagrechte längs der Brücke 4 verlaufende erste Bezugsrichtung, eine vertikale nach oben ausgerichtete zweite Bezugsrichtung sowie eine auf die Längsrichtung und die vertikale Bezugsrichtung normal stehende dritte Bezugsrichtung aufweist. Eine solche Vorgabe eines Bezugssystems (A, A') ist insbesondere bei gerade verlaufenden Brücken 4 aber auch bei gerade verlaufenden Straßenabschnitten und Tunnels 46 vorteilhaft. Auf dem Fahrzeug 1 selbst wird ebenfalls ein Fahrzeugbezugssystem (X, X') vorgegeben. Dieses Fahrzeugbezugssystem (X, X') hat seinen Ursprung in einem vorgegebenen Punkt X des Fahrzeugs 1, wie aus den Fig. 1 und 2 ersichtlich, beispielsweise im rechten Heckbereich des Fahrzeugs 1. Die Vorgabe des Fahrzeugbezugssystems (X, X') sowie des vorgegebenen Punkts X am Fahrzeug 1 kann wiederum beliebig vorgenommen werden. Das Fahrzeugbezugssystem (X, X') wird im vorliegenden Ausführungsbeispiel so vorgegeben, dass eine Bezugsrichtung in Fahrtrichtung des Fahrzeugs 1, eine zweite Bezugsrichtung vertikal nach oben und eine dritte Bezugsrichtung normal auf die erste und die zweite Bezugsrichtung verläuft, etwa dergestalt, dass sich ein rechtshändig orientiertes Fahrzeugbezugssystem (X, X') ergibt.

Mittels eines im Fahrzeug 1 angeordneten GPS-Gerät werden die Relativposition B und die Relativausrichtung B' des Fahrzeugs 1 gegenüber dem Bezugssystem (A, A') ermittelt. Die Messung des GPS-Geräts wird im vorliegenden Ausführungsbeispiel durch zusätzliche Angaben ergänzt. Die Fahrtrichtung des Fahrzeugs 1 z.B. wird mittels eines elektronischen Kompasses bestimmt. Weiters wird die seitlichen Neigung und Längsneigung des Fahrzeugs 1 bestimmt. Schließlich können die Koordinaten jedes Punkts, der in Bezug auf das Fahrzeugbezugssystem (X, X') des Fahrzeugs 1 vorgegeben ist, auch in Bezug auf das Fahrzeugbezugssystem (X, X') angegeben werden. Die Transformation lässt sich durch die folgende Schreibweise darstellen:

$$Y_{(A,\,A')} = B'\, Y_{(X,\,X')} + B$$

$$Y_{(A, A')} = \underline{B}(Y_{(X, X')})$$

Dabei stellt $Y_{(X, X')}$ einen Punkt in Koordinaten des Fahrzeugbezugssystems (X, X') dar und $Y_{(A, A')}$ stellt denselben Punkt im Bezugssystem (A, A') dar. Die relative Ausrichtung B' kann durch eine Transformationsmatrix, die Relativposition B durch einen Verschiebungsvektor B dargestellt werden. $\underline{B}$ stellt eine Transformationsfunktion dar, die aus einem in Bezug auf das Fahrzeugbezugsystem (X, X') gegebenen Punkt $Y_{(X, X')}$ einen in Bezug auf das Bezugssystem (A, A') gegebenen Punkt $Y_{(A, A')}$ liefert.

Durch diese Maßnahme kann auf einfache Weise eine Transformation der Koordinatenwerte von Punkten Y vorgenommen werden, wenn ihre Koordinatenwerte in Bezug auf das Fahrzeugbezugssystem (X, X') vorgegeben sind und ihre Koordinatenwerte in Bezug auf das Bezugssystem zu ermitteln sind.

In einem weiteren Schritt wird die Positionierung und Ausrichtung des Sensors 3 in Bezug auf das durch das am Fahrzeug 1 vorgegebene Fahrzeugbezugssystem (X, X') ermittelt. Jedes der Gelenke 21 sowie falls verfügbar auch der Drehkranz 24 sind unabhängig voneinander verstellbar und ermöglichen eine Positions- und Ausrichtungsveränderung des Sensors 3. Durch die Gelenke 21 sind die einzelnen Auslegerelemente 25 des Auslegers 2 miteinander verbunden. Jede der Relativwerstellungen eines Auslegerelements 25 gegenüber seinem jeweils dem Fahrzeug 1 näheren Auslegerelement 25 wird wiederum durch eine Transformation $\underline{L_1}$ ... $\underline{L_n}$ dargestellt. Auf jedem der Auslegerelemente 25 ist jeweils ein Elementbezugssystem (L1, L1') ... (Ln, Ln') vorgegeben, wobei L1 ... Ln jeweils einen Bezugspunkt am jeweiligen Auslegerelement 25 und Ln' die jeweilige Ausrichtung bzw. Orientierung des Auslegerelements 25 mit drei Bezugsrichtungen, etwa in Längsrichtung und zwei normal dazu verlaufenden Richtungen, angegeben sind. Mit dem letzten Auslegerelement 25 ist der Träger 31 fest verbunden, wobei auf dem Träger 31 ein Trägerbezugssystem (S, S') vorgegeben ist. Die Position eines Sensors 3 in Bezug auf das Trägerbezugssystem (S, S') ist, da der Sensor 3 fest mit dem Träger 31 verbunden ist, konstant und wird im folgenden mit $Y_s$ bezeichnet. Will man die Position $Y_S$ des Sensors 3 in Bezug auf das Fahrzeugbezugssystem angeben, so ist bei einem Ausleger mit fünf Gelenken 21 folgendermaßen vorzugehen:

$$Y_{S, (X, X')} = \underline{L_1} \ ( \ \underline{L_2} \ ( \ \underline{L_3} \ ( \ \underline{L_4} \ ( \ \underline{L_5} \ (Y_{S, (S, S')} )))))$$

Schließlich kann die Sensorposition $Y_s$ auch in Bezug auf das Bezugssystem (A, A') angegeben werden:

$$Y_{S, (A, A')} = \underline{B} \ (\underline{L_1} \ ( \ \underline{L_2} \ ( \ \underline{L_3} \ ( \ \underline{L_4} \ ( \ \underline{L_5} \ (Y_{S, (S, S')} ))))))$$

Fasst man die durch Relativposition C und Relativausrichtung C' des Sensors 3 gegenüber dem Ausleger 2 bewirkte Koordinatentransformation zusammen, so gelangt man zu:

$$Y_{S, (X, X')} = \underline{C} \ (Y_{S, (S, S')} ),$$

wobei $\underline{C}$ die durch die Relativposition C und Relativausrichtung C' des Sensors 3 gegenüber dem Ausleger 2 bewirkte Koordinatentransformation in sich trägt. Mittels einer Sensorpositionsbestimmungseinheit 61 kann die Position $Y_{s, (X, X')}$ des Sensors 3 gegenüber dem Ausleger 2 ermittelt werden. Der Sensorpositionsbestimmungseinheit 61 sind die jeweiligen Stellgrößen der einzelnen Stellelemente 23 sowie die vorab bekannte Position $Y_{s, (S, S')}$ des Sensors 3 in Bezug auf das Sensorkoordinatensystem (S, S') zugeführt. Vorteilhaft können auch die ermittelten Ausgangswerte der Gelenksstellungsmesseinheit 67 Jede der einzelnen Stellgrößen der Stellelemente 23 beeinflusst jeweils eine der Transformationen $\underline{L_1}$ ... $\underline{L_n}$. Schließlich gelangt man durch Zusammenfassen zu:

$$Y_{S, (A, A')} = \underline{B} \ ( \ \underline{C} \ (Y_{S, (S, S')} )) = \underline{D} \ (Y_{S, (S, S')} )$$

Die Transformationsfunktion $\underline{D}$ wandelt einen in Bezug auf das Sensorbezugssystem (S,S) dargestellten Punkt $Y_s$ in einen in Bezug auf das Bezugssystem (A, A') dargestellten Punkt $Y_s$ um.

**Fig. 9** zeigt eine schematische Darstellung einer Verarbeitungseinheit. Die Transformationsfunktion $\underline{D}$ wird von einer Messpositionsbestimmungseinheit 62 durchgeführt. Der Messpositionsbestimmungseinheit 62 ist der Ausgangswert der Sensorpositionsbestimmungseinheit 61, nämlich die Position $Y_{s' \, (X, \, X')}$, des Sensors 3 in Bezug auf das Fahrzeugbezugssystem (X, X'), zugeführt sowie die jeweiligen Werte des GPS-Empfängers, des Kompasses sowie des Neigungsmessers zugeführt. Mittels der GPS-Daten, der Kompassrichtung sowie der Neigung des Fahrzeugs 1 wird die Transformationsfunktion $\underline{B}$ ermittelt, die anschließend auf den Ausgangswert der Sensorpositionsbestimmungseinheit 61 angewendet wird.

Durch dieses Vorgehen kann die Position $Y_{s' \, (S, \, S')}$ jedes fest auf dem Träger 31 montierten Sensors 3 in Bezug auf das Bezugssystem (A, A') dargestellt werden. Die Transformationsfunktion $\underline{D}$ ist isometrisch.

Die einzelnen Transformationsvorschriften $\underline{L}_1$ ... $\underline{L}_n$ hängen einerseits von den gegenseitigen Stellungen der Stellelemente 23 sowie andererseits von der Länge der einzelnen Auslegerelemente 25 ab. Die Auswahl der konkreten Koordinatenrichtungen sowie der Ursprungspunkte in den einzelnen Elementbezugssystemen (L1, L1') ... (Ln, Ln') ist dabei vollkommen unerheblich.

Sind am Träger 31 mehrere Sensoren 3 angeordnet, so können auch die Positionen der Sensoren 3 bestimmt werden. Die von den einzelnen Sensoren 3 gelieferten Messwerte werden gemeinsam mit den Koordinatenwerten der Position des jeweiligen Sensors 3 in Bezug auf das Bezugssystem (A, A') in einzelnen Datensätzen in einem Speicher 64 einer Datenerfassungseinheit 63 abgelegt. Es wird eine Zuordnung zwischen den von den Sensoren 3 ermittelten Messwerten mit den Koordinatenwerten der Position des jeweiligen Sensors 3 in Bezug auf das Bezugssystem (A, A') erstellt.

Um eine weitere Verbesserung der Positionierung zu erreichen, werden zusätzlich oder alternativ zur Positionierung mittels GPS auch herkömmliche weitere optische Triangulationsmethoden mit Messbildern verwendet, die beispielsweise mit der Kamera 5 aufgenommen worden sind.

Die einzelnen von der Kamera 5 aufgenommenen Bilder 51 der Brücke 4 werden zu einem Bildverband 52 - durch Vorhandensein gemeinsamer Merkmale 55 - zusammengesetzt, wobei mittels Methoden der Photogrammetrie die Position und Aufnahmerichtung der Kamera 5 und der einzelnen mit der Kamera 5 aufgenommenen Raumpunkte ermittelt werden kann (Fig. 10). Wenn sich die einzelnen Bilder 51 bei den einzelnen Messungen überscheiden, ist es mit den an sich bekannten Methoden der Photogrammetrie, wie z.B. Structure and Motion-Algorithmen, möglich, sämtliche im Zuge der Vermessung ermittelten Positionsdaten der Oberfläche des Bauwerks 44 in einem gemeinsamen Bezugssystem (A, A') darzustellen.

Für eine verbesserte Ermittlung der 3D Position der Kamera 5 wird eine "Structure and Motion" Software verwendet. Dieses Verfahren wird mit der oben dargestellten kinematischen Analyse des Auslegers 2 kombiniert, wobei aufgrund der wesentlich höheren Genauigkeit des "Structure and Motion"-Verfahrens die Genauigkeit der relativen Positionsbestimmung wesentlich verbessert wird.

Zur Verwendung von "Structure & Motion" Algorithmen wird eine Offline-Kamerakalibrierung durchgeführt. Weiters wird die Position der Kamera 5 relativ zum Ende 22 des Auslegers 2 bestimmt. Diese, sogenannte "hand-eye" Kalibrierung, wird zu unterschiedlichen Zeitpunkten, beispielsweise vor und nach der jeweiligen Messung, durchgeführt.

Bei "Structure and Motion"-Algorithmen wird die relative Position der Kamera 5 aufgrund einer Serie von stark überlappenden Bildern 51 berechnet. Dabei wird die GPS-Position und die Position des Auslegers 2 und des Trägers 31 zur Grobpositionierung berücksichtigt. Zusätzlich zur Position der Kamera 5 wird eine 3D Punktwolke erstellt, die Oberflächenpunkte des Bauwerks 44 enthält. Diese Punktwolke mit den abgespeicherten Positionen der Kamera 5 und 3D Punkten abgespeichert und mit den aufgenommenen Messdaten korreliert.

Bildverbände 52, die zu unterschiedlichen Zeiten aufgenommen und berechnet worden sind, können überlagert dargestellt und analysiert werden.

Die Verwendung von bildgebenden Sensoren 3 ist in den **Fig. 6 bis 8** dargestellt. Bei bildgebenden Sensoren 3 wird nach jeder Aufnahme jeweils ein Sensorbild 30 erstellt. Jedem Pixel 33 des Sensorbilds 30 ist jeweils ein Raumbereich 35 zugeordnet, der in Bezug auf den Sensor 3, somit auch auf das Sensorbezugssystem (S, S') fest vorgegeben ist. Mittels einer Transformation wird bei Ausgabe der Pixel-Koordinaten für jedes der Pixel des Sensorbilds 30 derjenige Raumbereich 35 oder Raumpunkt 36 im Bezug auf das Sensorkoordinatensystem (S, S') ermittelt, dessen Messwert dem Pixelwert entspricht. So entspricht etwa bei einem durch eine Ultraschallmessung (**Fig. 8**) ermittelten Ultraschallbild 38 der Pixelwert jedes Pixels der Schallreflektivität eines im Aufnahmebereich des Ultraschallkopfs 37 befindlichen Raumbereichs 35.

Auch entspricht bei einem Kamerabild (**Fig. 6**) der Pixelwert jedes Pixels der von einem im Aufnahmebereich der Kamera 5 befindlichen Oberflächenbereich abgegebenen Strahlung bei einer vorgegebenen Lichtwellenlänge. Stets kann mittels einer Transformation ausgehend von den Pixelkoordinaten ein Raumbereich 35 oder Raumpunkt 36 in Bezug auf das Bezugssystem (A, A') ermittelt werden, dessen Vermessung einen Messwert liefert, der als Pixelwert des jeweiligen Pixels abgespeichert ist. Jedem Pixel ist somit ein fester Raumpunkt 36 oder Raumbereich 35 des Sensorkoordinatensystems (S, S') zugeordnet.

**Fig. 6** zeigt einen Flächensensor umfassend eine Vielzahl von Sensorpixeln 33, die rasterförmig bzw. flächenhaft angeordnet sind. Jedes der Sensorpixel 33 weist einen vorgegebenen Aufnahmebereich auf, der einen in Bezug auf das Sensorbezugssystem (S, S') feststehenden Raumbereich 35 definiert ist. Der im Aufnahmebereich des jeweiligen Sensorpixels 33 befindliche Oberflächenbereich wird vom jeweiligen Sensorpixel 33, das als Helligkeitssensor ausgebildet ist, aufgenommen.

Aufnahmebereiche werden für mehrere Wellenlängenbereichen aufgenommen bzw. abgebildet, wobei eine Bestrahlung des Aufnahmebereichs mit einer auf dem Träger 31 montierten Strahlungsquelle 39 erfolgt.

Anstelle eines Flächensensors mit rasterartig angeordneten Sensorpixeln 33 kann auch ein Zeilensensor, dargestellt in **Fig. 7**, mit zeilenförmig bzw. in einer Reihe angeordneten Sensorpixeln 33 verwendet werden. Weiters ist es auch möglich, wie in **Fig. 8** dargestellt, den Sensor (3), beispielsweise einen Ultraschallkopf 37, unmittelbar auf die zu untersuchenden Stellen 41 aufzusetzen. Dabei wird für jede zu untersuchende Stelle 41 ein Ultraschallbild 38 aufgenommen. Das Ultraschallbild 38 umfasst dabei eine Vielzahl unterschiedlicher Bildpunkte, wobei jeder der Bildpunkte jeweils einem in Bezug auf den Ultraschallkopf 37 feststehenden Raumbereich 35 entspricht. Diese in Bezug auf den Ultraschallkopf 37 feststehenden Raumbereiche 35 können durch Anwendung der Transformationsfunktion **D** auch in Bezug auf das Bezugssystem (A, A') angegeben werden, sodass jeder einzelne in einem Pixel des Ultraschallbilds gespeicherte Dichtewert gemeinsam mit dem jeweiligen Raumbereich 35, für den der Wert ermittelt worden ist, abgespeichert wird.

Neben den bislang beschriebenen Sensoren 3 können prinzipiell sämtliche verfügbaren für die Verwendung von Eigenschaften der Substanz 43 eines Bauwerks 44 geeigneten Sensoren 3 erfindungsgemäß verwendet werden. So ist es etwa möglich, eine Prüfung der Substanz 43 des Bauwerks 44, etwa des Betons der Brücke 4, mit einem Detektions-und Ortungsverfahren durchzuführen, das auf der Basis von elektromagnetischen Wellen im Radiofrequenzbereich arbeitet. Eine alternative Aufnahme kann mit mikrowellenbasierten Verfahren erreicht werden. Mit einem solchen Sensor 3 wird die Reflektivität der Substanz 43 des Bauwerks 44 bestimmt und indirekt auf bestimmte Materialeigenschaften, etwa die Dichte rückgeschlossen. Durch das Mikrowellenverfahren können der dielektrische Verlustfaktor, der spezifische elektrische Widerstand sowie magnetische Verluste frequenzabhängig bestimmt werden. Aufgrund der ermittelten Messwerte kann auf die Art, Güte und Beschaffenheit des Materials geschlossen werden. Es kann eine Mikrowellenmessung verwendet werden, um die Feuchtigkeitsverteilung in Bauwerken 44 und damit die Korrosionswahrscheinlichkeit zu bestimmen.

Ein weiterer vorteilhaft erfindungsgemäß einsetzbarer Sensor 3 bestimmt über einen Teil der Oberfläche des Bauwerks 44 oder über die gesamte Betonoberfläche einer aus Stahlbeton bestehenden Bauwerks 44, das elektrochemische Potential zwischen dem Stahl und einer auf den Beton gesetzten Cu/CuS04-Halbzelle (Kupfer/Kupfersulfat-Bezugselektrode). Als Potential wird die elektrische Spannung bezeichnet, die zwischen dem Stahl und dem leitfähigen, aus Kupfer bestehenden Teil der Bezugselektrode gemessen wird. Solche Sensoren 3 werden unmittelbar mit dem zu vermessenden Bauwerk 44 in Kontakt gebracht.

Die Potentialmessung bei Stahlbeton stellt eine weitere zerstörungsfreie Messmethode dar, mit der festgestellt werden kann, wo bzw. an welchen Stellen die Bewehrung im Beton korrodiert ist und welche Stellen des Stahlbetons von Korrosion betroffen oder gefährdet sind.

Der kathodische Polarisationswiderstand kann bevorzugt zur Bestimmung der Korrosion herangezogen werden, wenn eine chlorinduzierte Makroelementkorrosion vorliegt.

Die Substanz 43 des Bauwerks 44 kann auch mittels eines akkustischen Verfahrens geprüft werden. Zur Bestimmung der Materialeigenschaften der Substanz 43 werden Ultraschallwellen verwendet, die von einer Ultraschallquelle abgegeben werden, die auf das Bauwerk 44 unmittelbar aufgesetzt wird. Die kleinste Ungänze, die dargestellt werden kann, ist größer als die halbe Wellenlänge des Schalls, die abhängig von der Schallgeschwindigkeit des Materials und der Frequenz des Prüfkopfs ist. Bei einer Frequenz von 4 MHz kommt man in Stahl auf Auflösungen von rund 0,7mm. Die Frequenzhöhe ist begrenzt, da die Korngrenzen des Gefüges zu Streuung und Absorption führen, wodurch sich die Eindringtiefe verringert.

Weiters ist für die Prüfung von Bauwerken 44 das Impact-Echo Verfahren bekannt, das grundsätzlich der Ultraschallmessung sehr ähnlich ist. Im Gegensatz zum Ultraschall, arbeiten Impact-Echo Sensoren im hörbaren Schallbereich.

Weiters sind dem Fachmann im Bauwesen ganz allgemein die folgenden zerstörungsfreien Messverfahren bekannt: Ultraschalllaufzeit-Verfahren, Ultraschallecho-Verfahren, Impact-Echo-Verfahren, Schallemissionsanalyse, Radar und Infrarot-Thermografie. Für sämtliche Verfahren sind Sensoren 3 verfügbar, die für jeden Messpunkt jeweils Messwerte oder Bilder liefern.

Im erfindungsgemäßen Ausführungsbeispiel sind auf dem Träger 31 sämtliche oben beschriebenen Arten von Sensoren 3 angeordnet, um ein möglichst vollständiges Messergebnis des zu inspizierenden Bauwerks 44 zu erreichen. Alternativ können jedoch einzelne Sensoren 3, deren Messwerte für die gegenständlichen Betrachtungen irrelevant sind, weggelassen werden, ohne dass hierdurch das erfindungsgemäße Verfahren beeinträchtigt wäre.

Zusätzlich kann auch an den vorgegebenen Stellen 41 ein Bohrkern aus der Brücke entnommen werden, wenn dies die Statik nicht beeinträchtigt. Mittels der Bohrkernmessung kann auch der Chloridgehalt und der pH-Wert der Substanz 43 Brücke 4 ermittelt werden.

Die Ausführungen, die im dargestellten Beispiel in bezug auf eine Brücke 4 sowie einen Tunnel 46 dargestellt sind, lassen sich ohne weiteres auch auf andere Bauwerke 44 im Bereich von Straßen oder Schienenstrecken etwa Befestigungen, Mauerwerke, Lawinenverbauungen usw. übertragen. Dabei wird jeweils der dem Fahrzeug 1 ferne Endbereich 22 des Auslegers 2 zu einer vorgegebenen Stelle 41 des jeweiligen Bauwerks 44 geführt und anschließend werden mit den Sensoren 3 die Eigenschaften des jeweiligen Bauwerks 44 vermessen.

Selbstverständlich ist unter einem Fahrzeug 1 jede Form von Straßenfahrzeug oder Schienenfahrzeug zu verstehen.

In beiden dargestellten Ausführungsbeispielen ist vorgesehen, dass das Fahrzeug 1 über ein Funk-Netzwerk mit einem Auswertungsrechner in Kontakt steht. Die Daten werden an einen Sachverständigen weitergeleitet, der die Daten gefahrlos und graphisch aufbereitet am Computer überprüfen und analysieren kann.

Durch Wiederholungsmessungen können zudem Zeitreihen erstellt werden, die das Zeitverhalten der Brücke, etwa über einen Tag, im Verlauf eines Jahres oder über mehrere Jahre hinweg darstellen.

Eine weitere besondere Ausführungsform der Erfindung betrifft eine transportable Einrichtung zur räumlich ferngesteuerten oder automatischen zerstörungsfreien Inspektion von Beton-, Stahlbeton- (Stahl- Holz-) Bauwerken 44, bestehend aus einem Fahrgestell 12, einem Ausleger 2, einem Träger 31 und Sensoren 3. Diese Ausführungsform verfügt über die oben beschriebenen Maßnahmen zur Bestimmung der Messposition D und Messausrichtung D' der Sensoren gegenüber dem Bezugssystem (A, A') und liefert somit eine eineindeutige dreidimensional georeferenzierte elektronisch Positionierungseinrichtung, Datenspeicherung, -analyse und -visualisierung von Messdaten, die in Bezug auf ein Gebäude gemessen worden sind.

Photogrammetrische Verfahren sind dem Fachmann seit langem allgemein bekannt und sind in den Bänden "Photogrammetrie 1 - 3", de Gruyter von Prof. Karl Kraus eingehend beschrieben und sind. Die Verfahren können selbstverständlich im Rahmen der Erfindung zur Verbesserung der Genauigkeit eingesetzt werden.

**Patentansprüche**

1. Verfahren zur Aufnahme von Messdaten an entlang einer Straße an einer Brücke (4) oder an einem Bauwerk (44) befindlichen, zu untersuchenden Stellen (41) mit einem Fahrzeug (1)

   - wobei das Fahrzeug (1) einen Ausleger (2) umfassend eine Anzahl von mit Gelenken (21) verbundenen Auslegerelementen (25) aufweist, wobei die Stellung der Gelenke (21) durch Stellelemente (23) stellbar ist,
   - wobei an dem dem Fahrzeug (1) fernen Endbereich (22) des Auslegers (2) zumindest ein Sensor (3) angeordnet ist,
   - wobei das Fahrzeug (1) entlang der Straße oder über die Brücke (4) bewegt wird, und die Position (B) und Ausrichtung (B') des Fahrzeugs (1) in Bezug auf ein vorgegebenes Bezugssystem (A, A') mit einem vorgegebenen festen Bezugspunkt (A) und einer Bezugsausrichtung (A') bestimmt werden,
   - wobei die Position des Auslegers (2) durch Verstellung der Stellelemente (23) derart festgelegt wird, dass der Sensor (3) jeweils auf eine der entlang der Straße oder Brücke (4) angeordneten, zu untersuchenden Stellen (41) gerichtet wird,
   - wobei anhand der gewählten Einstellung der Stellelemente (23) die Relativposition (C) und Relativausrichtung (C') des Sensors (3) gegenüber dem Fahrzeug (1) ermittelt werden,
   - wobei aufgrund der ermittelten Position (B) und Ausrichtung (B') des Fahrzeugs (1) gegenüber dem Bezugssystem (A, A') und der Relativposition (C) und Relativausrichtung (C') des Sensors (3) gegenüber dem Fahrzeug (1) die Messposition (D) und die Messausrichtung (D') des Sensors (3) gegenüber dem Bezugssystem (A, A') ermittelt werden, und
   - wobei Messdatensätze erstellt werden, die die mit dem Sensor (3) ermittelten Messwerte sowie diejenige Messposition (D) und Messausrichtung (D') enthalten, in der sich der Sensor (3) zum Zeitpunkt der Aufnahme des Messwerts befunden hat.

2. Verfahren nach Anspruch 1, **dadurch gekennzeichnet, dass** die Ermittlung der Position (B) und Ausrichtung (B') des Fahrzeugs (1) in Bezug auf den vorgegebenen, festen Bezugspunkt (A) mittels GPS und/oder mittels eines Kompasses und/oder mittels eines Neigungsmessgeräts und/oder sonstigen geeigneten Methoden und Sensoreinheiten vorgenommen wird.

3. Verfahren nach Anspruch 1 oder 2, **dadurch gekennzeichnet,**

   - **dass** an dem dem Fahrzeug (1) fernen Endbereich (22) des Auslegers (2) eine Kamera (5) angeordnet ist, die auf die zu untersuchenden Stellen (41) gerichtet ist,

- **dass** anhand der mit der Kamera (5) aufgenommenen Bilder (51) zu einem Bildverband (52) aneinandergefügt werden, wobei jedes Pixel des Bildverbands (52) genau ein Oberflächenpunkt des Bauwerks (44) oder der Brücke (4) entspricht,
- **dass** für jedes der Pixel des Bildverbands (52) jeweils die Koordinaten des abgebildeten Oberflächenpunkts des Bauwerks (44) oder der Brücke (4) zugewiesen werden und,
- **dass** die Bestimmung der Messposition (D) und Messausrichtung (D') der Sensoren (3) durch die Lokalisierung des jeweiligen zugehörigen Raumpunktes anhand des aktuellen, mit der Kamera (5) erstellten Bildes (51) im Bildverband (52) erfolgt.

4.  Verfahren nach einem der vorangehenden Ansprüche, **dadurch gekennzeichnet, dass** der am Fahrzeug (1) angeordnete Ausleger (2) derart angesteuert ist, dass auftretende Schwingungen des Auslegers (2) kompensiert werden.

5.  Verfahren nach einem der vorangehenden Ansprüche, **dadurch gekennzeichnet, dass** das Fahrgestell (12) des Fahrzeugs (1) und/oder die Verbindung zwischen dem Fahrzeug (1) und dem Ausleger (2) drehmomentkompensiert und/oder schwingungsgedämpft wird.

6.  Verfahren nach einem der vorangehenden Ansprüche, **dadurch gekennzeichnet, dass** der Ausleger (2) mehr als fünf, vorzugsweise genau oder mehr als sieben, unabhängig voneinander ansteuerbare Stellelemente (23) aufweist.

7.  Verfahren nach einem der vorangehenden Ansprüche, **dadurch gekennzeichnet, dass** mehrere an dem dem Fahrzeug (1) fernen Endbereich (22) des Auslegers (2) befindliche Sensoren (3) vorgesehen sind, wobei die jeweilige Messposition (D) und Messausrichtung (D') der einzelnen Sensoren (3) gemeinsam mit der jeweils von einem Sensor (3) ermittelten Messgröße in einem Messdatensatz abgespeichert werden.

8.  Verfahren nach einem der vorangehenden Ansprüche, **dadurch gekennzeichnet,**

- **dass** der Sensor (3) mit einer Anzahl von nebeneinander oder rasterförmig angeordneten Sensorpixeln (33) zur Aufnahme von Zeilen- oder Flächenbildern (34) ausgebildet ist,
- **dass** für jedes Sensorpixel (33) des Sensors (3) vorab derjenige Raumbereich (35), Flächenbereich oder Raumpunkt (36) in Bezug auf eine vorgegebene Position (S) am Sensor (3) ermittelt wird, dessen physikalische Eigenschaften vom jeweiligen Sensorpixel (33) in Form eines Messwerts ermittelt werden,
- **dass** anhand der Messposition (D) und Messausrichtung (D') sowie des dem jeweiligen Sensorpixels (33) zugeordneten Raumbereichs (35), Flächenbereichs oder Raumpunkts (36) die Pixelposition (E), und gegebenenfalls die Pixelausrichtung (E'), des vom Pixel aufgenommenen Raumbereichs gegenüber dem Bezugspunkt (A) ermittelt werden, und
- **dass** für jeden mit jeweils einem Sensorpixel (33) aufgenommenen Messwert ein Messdatensatz erstellt wird, der den Messwert sowie die Pixelposition (E) und gegebenenfalls die Pixelausrichtung (E') enthält.

9.  Fahrzeug umfassend

- einen Ausleger (2) mit einer Anzahl von Gelenken (21) und Stellelementen (23),
- wobei an dem dem Fahrzeug (1) fernen Endbereich (22) des Auslegers (2) zumindest ein Sensor (3) angeordnet ist, und
- wobei das Fahrzeug (1) eine Positionsbestimmungseinheit (60) zur Bestimmung der Position (B) und Ausrichtung (B') des Fahrzeugs (1) in Bezug auf einen vorgegebenen, festen Bezugspunkt (A) aufweist,
**gekennzeichnet durch**
- eine Sensorpositionsbestimmungseinheit (61), die die Relativposition (C) und Relativausrichtung (C') des Auslegers (2) gegenüber dem Fahrzeug (1) ermittelt,
- eine Messpositionsbestimmungseinheit (62), die aufgrund der ermittelten Position (B) und Ausrichtung (B') des Fahrzeugs (1) gegenüber dem Bezugspunkt (A) und der **durch** die Stellung der Gelenke (21) der Stellelemente (23) festgelegten Relativposition (C) und Relativausrichtung (C') des Sensors (3) gegenüber dem Fahrzeug (1) die Messposition (D) und die Messausrichtung (D') des Sensors (3) gegenüber dem Bezugspunkt (A) ermittelt, sowie
- eine Datenerfassungseinheit (63) mit einem Speicher (64), die die mit dem Sensor (3) ermittelten Messwerte derjenigen Messposition (D) und auch derjenigen Messausrichtungen (D') zuordnet, in der sich der Sensor (3) zum Zeitpunkt der Aufnahme des Messwerts befindet oder befunden hat.

**10.** Fahrzeug nach Anspruch 9, **dadurch gekennzeichnet, dass** die Positionsbestimmungseinheit (60) ein GPS-Gerät, sowie gegebenenfalls einen Kompass und/oder ein Neigungsmessgerät umfasst.

**11.** Fahrzeug nach Anspruch 9 oder 10, **dadurch gekennzeichnet,**

**dass** eine Kamera (5) vorgesehen ist, die an dem dem Fahrzeug (1) fernen Endbereich (22) des Auslegers (2) angeordnet ist,

**dass** ein Bildspeicher zum Abspeichern eines Bildverbands (52) vorgesehen ist, der aus der mit der Kamera (5) aufgenommenen Bildern (51) zusammengesetzt ist,

**dass** eine Bildverbandsbildungseinheit vorgesehen ist, der die einzelnen Bilder (51) zugeführt sind und die aus den Bildern (51) einen Bildverband (52) erstellt,

**dass** der Kamera (5) eine Positionierungseinheit zur Bestimmung der Relativposition nachgeschaltet ist, in der ein "Structure and Motion"- Algorithmus implementiert ist,

und der Bildverband (52) sowie die von der Kamera (5) erstellten Bilder (51) der Positionierungseinheit zugeführt ist, und

**dass** die von der Positionierungseinheit ermittelte Relativposition der Messpositionsbestimmungseinheit zugeführt ist.

**12.** Fahrzeug nach einem der Ansprüche 9 bis 11, **dadurch gekennzeichnet, dass** der am Fahrzeug (1) angeordnete Ausleger (2) über eine Drehmomentkompensation verfügt, die derart ausgebildet ist, dass auftretende Schwingungen des Auslegers (2) kompensiert werden, und/oder dass das Fahrgestell (12) des Fahrzeugs (1) und/oder die Verbindung zwischen dem Fahrzeug (1) und dem Ausleger (2) schwingungsgedämpft ist.

**13.** Fahrzeug nach einem der Ansprüche 9 bis 12, **dadurch gekennzeichnet,**

**dass** der Ausleger (2) mehr als fünf, vorzugsweise genau oder mehr als sieben, unabhängig voneinander ansteuerbare Stellelemente (23) aufweist.

**14.** Fahrzeug nach einem der Ansprüche 9 bis 13, **dadurch gekennzeichnet, dass** mehrere an dem dem Fahrzeug (1) fernen Endbereich (22) des Auslegers (2) befindliche Sensoren (3) vorgesehen sind, und dass die Datenerfassungseinheit (63) die jeweilige Messposition (D) und Messausrichtung (D') der einzelnen Sensoren (3) gemeinsam mit dem jeweils von einem Sensor (3) ermittelten Messgröße in einem Messdatensatz in ihrem Speicher (64) abspeichert.

**15.** Fahrzeug nach einem der Ansprüche 9 bis 14, **dadurch gekennzeichnet,**

- **dass** der Sensor (3) mit einer Anzahl von nebeneinander oder rasterförmig angeordneten Sensorpixeln (33) zur Aufnahme von Zeilen- oder Flächenbildern (34) ausgebildet ist,
- **dass** für jedes Sensorpixel (33) des Sensors (3) vorab derjenige Raumbereich (35), Flächenbereich oder Raumpunkt (36) in Bezug auf eine vorgegebene Position (S) am Sensor (3) vorgegeben ist, dessen physikalische Eigenschaften vom jeweiligen Sensorpixel (33) in Form eines Messwerts zu ermitteln sind, und
- **dass** die Datenerfassungseinheit (63) anhand der Messposition (D) und Messausrichtung (D') sowie des dem jeweiligen Sensorpixels (33) zugeordneten Raumbereichs (35), Flächenbereichs oder Raumpunkts (36) die Pixelposition (E), und gegebenenfalls und die Pixelausrichtung (E'), des vom Pixel aufgenommenen Raumbereichs (35) gegenüber dem Bezugspunkt (A) ermittelt und für jeden mit jeweils einem Sensorpixel (33) aufgenommenen Messwert einen Messdatensatz erstellt, der den Messwert sowie die Pixelposition (E) und gegebenenfalls die Pixelausrichtung (E') enthält.

Fig.4

Fig.1

EP 2 444 361 A2

14

Fig.2

Fig.3

Fig.5

Fig.6

Fig.7

Fig.8

Fig.9

Fig.10